# EUROPÄISCHE PATENTSCHRIFT

(11) **EP 1 769 062 B1**
(45) Veröffentlichungstag und Bekanntmachung des Hinweises auf die Patenterteilung: **11.04.2012**
(21) Anmeldenummer: 05771400.8
(22) Anmeldetag: 14.07.2005
(51) Int. Cl.: C12C 7/20, C12C 7/22, C12C 13/02

(54) **WÜRZEKOCHVERFAHREN**
WORT BOILING METHOD
PROCEDE DE CUISSON DE MOUT

(30) Priorität: 17.07.2004 DE 102004034555; 15.04.2005 DE 102005017457
(43) Veröffentlichungstag der Anmeldung: 04.04.2007
(73) Patentinhaber: Hertel, Katja, 7500 St. Moritz (CH)
(72) Erfinder: Hertel, Katja, 7500 St. Moritz (CH)
(74) Vertreter: Kopp, Stephan
(86) Internationale Anmeldenummer: PCT/EP2005/007663
(87) Internationale Veröffentlichungsnummer: WO 2006/008064

(56) Entgegenhaltungen:
- DE-A1- 3 618 156
- US-A- 6 017 568
- US-A1- 2003 044 500

## Beschreibung

Die Anmeldung bezieht sich auf ein Verfahren zur Würzekochung im Zuge eines Bierbrauprozesses.

Als Würze wird im Brauwesen das flüssige, klare Endprodukt bezeichnet, das bei der Herstellung von Bier am Ende des Läutems entsteht. Die Würze wird im Zuge des herkömmlichen Bierbrauprozesses gekocht, um unerwünschte leichtflüchtige Fremdaromastoffe mit dem Kochdampf auszutreiben. Die Würzekochung dient weiterhin zur Koagulation des in der Würze enthaltenen Eiweißes, zur Zerstörung der Malzenzyme, zur Sterilisation der Würze und zur Isomerisierung von Hopfenbitterstoffen. Außerdem werden während der Würzekochung erwünschte Aromastoffe gebildet.

Bei einem klassischen Brauverfahren, wie es insbesondere in kleinen und mittleren Brauereien in der Regel betrieben wird, ist zur Würzekochung eine sogenannte Sudpfanne vorgesehen, in welcher die Würze diskontinuierlich, d.h. chargenweise gekocht wird. Der während der Würzekochung entstehende Würzedampf wird dabei durch den Dampfauslass der Sudpfanne abgeleitet. Mitunter kommen, insbesondere im industriellen Brauwesen, weiterhin auch Verfahren zum Einsatz, bei welchen die Würze im kontinuierlichen Durchfluss gekocht wird.

Die Energiekosten stellen einen wesentlichen Kostenfaktor bei der herkömmlichen Bierherstellung dar. So beträgt der durchschnittliche Wärmebedarf für den Brauprozess ca. 145 bis 185 MJ/hl Verkaufsbier. Hierbei fällt mit 81 bis 128 MJ/hl Verkaufsbier der größte Energieaufwand auf die Würzebereitung, so dass in der Realisierung eines energiesparenden Würzekochverfahrens ein erhebliches Rationalisierungspotential liegt.

Aus M. Hertel "Untersuchungen zum Ausdampfverhalten von Aromastoffen bei der Würzekochung aus verfahrenstechnischer Sicht", in: "Jahrbuch 2002 der Freunde des Lehrstuhls für Maschinen- und Apparatekunde e.V.", Eigenverlag des Lehrstuhls für Maschinen- und Apparatekunde, Technische Universität München, 2002 ist bekannt, die Würzebereitung durch Rektifikation der Würze vorzunehmen, um die leichtverflüchtigen Komponenten der Würzaromastoffe im Dampf zu erhöhen und so die Gesamtverdampfung zu verringern.

Der Begriff Rektifikation oder Gegenstromdestillation bezeichnet allgemein ein thermisches chemisches Trennverfahren, bei welchem durch Gegenstromführung zweier Phasen, insbesondere einer Dampfphase und einer in direktem Kontakt mit dieser stehenden Flüssigkeitsphase, mehrere Destillationsschritte diskret oder kontinuierlich hintereinandergeschaltet sind.

Im Brauwesen wird Rektifikation im Zuge der Würzekochung bisher in Form eines "Stripping"-Verfahrens eingesetzt, bei welchem die Würze kontinuierlich in den Kopfbereich einer Abtriebskolonne eingeleitet und beim Abströmen innerhalb dieser Kolonne im Gegenstrom mit Inertgas oder Dampf beaufschlagt wird. An der Kontaktfläche zwischen der abströmenden Würze und dem gegenströmenden Dampf werden leichtflüchtige Aromastoffe von dem Dampf aufgenommen und somit aus der Würze entfernt. Derartige Verfahren, wie sie beispielsweise aus den Dokumenten DE 31 26 714 A1, US 4,550,029, WO 95/26395 und WO 97/15654 A1 bekannt sind, sind jedoch nur vergleichsweise aufwendig zu realisieren und können daher in der Regel nur im industriellen Brauwesen, nicht jedoch in kleinen und mittleren Brauereien wirtschaftlich eingesetzt werden.

Ein weiterer Nachteil der bekannten "Stripping"-Verfahren ist, dass sich beim Durchlauf der Würze durch die Abtriebskolonne feste Rückstände der Würze in der Kolonne, insbesondere an den Kolonneneinbauten, absetzen. Die Kolonne wird hierdurch verschmutzt und muss in häufigen Abständen gereinigt werden. Zumal Einbauten einer Rektifikationskolonne üblicherweise eine vergleichsweise feingliedrige Struktur aufweisen, ist ein solcher Reinigungsprozess mit hohem Aufwand verbunden.

Die deutsche Offenlegungsschrift DE 36 18 156 A1 offenbart ein Verfahren zur Alkoholgewinnung, bei dem aus vergorener Maische Alkohol destilliert wird. Dabei wird die Maische in einem Blasenkessel durch direkte Beheizung desselben auf eine entsprechende Siedetemperatur, beispielsweise etwa 93 °C, erhitzt. Die entstehenden alkoholischen Dämpfe werden in eine sich an den Blasenkessel anschließende Destillier- oder Rektifizierkolonne eingeleitet, dort verstärkt und der gereinigte oder ungereinigte Alkohol aus der Kolonne abgezogen.

Der Erfindung liegt die Aufgabe zugrunde, ein energiesparendes und hinsichtlich der Realisation und der Handhabung vereinfachtes Verfahren zur Würzekochung anzugeben.

Bezüglich des Verfahrens wird diese Aufgabe erfindungsgemäß gelöst durch die Merkmale des Anspruchs 1.

Danach wird die zu kochende Würze chargenweise und diskontinuierlich einer Sudpfanne zugeführt und in dieser während einer Kochphase bei einer im Wesentlichen durch die Zusammensetzung der Würze und die Druckverhältnisse vorgegebenen Kochtemperatur eine vorgegebene Kochzeit gekocht. Die Sudpfanne ist dampfseitig mit einer Auftriebskolonne verbunden, in welcher der während dieser Kochphase entweichende Würzedampf im Gegenstrom mit dem auskondensierenden Dampfkondensat einer Rektifikation unterzogen wird.

Die Erfindung kombiniert somit die Vorteile der klassischen diskontinuierlichen Würzekochung, die insbesondere in deren vergleichsweise einfacher Realisierbarkeit und Handhabbarkeit bestehen, mit der durch ein Rektifikationsverfahren erreichbaren Effizienzsteigerung. Letztere äußert sich gegenüber einem einfachen Sudverfahren in einer wesentlichen Reduzierung der benötigten Gesamtverdampfung und infolgedessen in einer deutlichen Energieeinsparung.

In einer unter handhabungstechnischen Gesichtpunkten vorteilhaften Ausführung des Verfahrens wird ausschließlich der aufsteigende Würzedampf der Auftriebskolonne zugeleitet. Ein wesentlicher Vorteil dieser Verfahrensvariante liegt darin, dass nicht die Würze, sondern lediglich der Würzedampf und das in der Auftriebskolonne anfallende Dampfkondensat mit der Auftriebskolonne und deren Einbauten in Berührung kommt. Schwer lösliche Würzebestandteile, die zur Bildung von festen Rückständen neigen, bleiben dagegen während der Kochphase im Bereich der Sudpfanne zurück. Der Reinigungsaufwand ist hierdurch wesentlich verringert.

In einer alternativen Verfahrensvariante wird die Würze während der Kochphase umgewälzt, indem die Würze aus der Sudpfanne - vorzugsweise von dem Boden der Sudpfanne - abgezogen und in die Auftriebskolonne eingeleitet wird. Die Auftriebskolonne wirkt hierdurch bezüglich der eingeleiteten Würze gleichzeitig als Abtriebskolonne. Versuche haben gezeigt, dass durch diese Zirkulation der Würze während der Kochphase eine besonders starke Abreicherung von Aromastoffen bewirkt wird. Zudem wird durch die Umwälzung der Würze während der Kochphase eine verbesserte Homogenisierung derselben erzielt, wodurch wiederum die Eiweißkoagulation und die Heißtrubbildung gefördert wird. Die Zirkulation der Würze wird durch eine Umwälzleitung bewirkt, die die Sudpfanne mit der Auftriebskolonne verbindet.

Ein Vorteil beider Verfahrensvarianten und der jeweils zugehörigen Vorrichtung liegt darin, dass zur Würzekochung eine herkömmliche Sudpfanne herangezogen werden kann, auf welche im Wesentlichen nur eine Auftriebskolonne aufzusetzen ist, um das erfindungsgemäße Verfahren ausführen zu können. Dies erlaubt eine vergleichsweise einfache Umrüstung einer bestehenden herkömmlichen Brauanlage auf das erfindungsgemäße Verfahren. Letzteres ist insbesondere aus diesem Grund auch von kleinen und mittleren Brauereien wirtschaftlich einsetzbar. Das in der Auftriebskolonne anfallende Dampfkondensat wird vorzugsweise in die Sudpfanne zurückgeleitet, um die Gesamtverdampfung besonders gering zu halten.

Um einerseits die Gesamtverdampfung auf ein zur Austreibung der unerwünschten Aromastoffe erforderliches Mindestmaß zu senken und hierzu die Kochphase möglichst kurz zu halten, andererseits jedoch sicherzustellen, dass die mit der Würzekochung in Gang gesetzten biochemischen Reaktionen, insbesondere die Eiweißkoagulation, Enzymzerstörung, Würzesterilisation und Hopfenisomerisierung, in gewünschtem Ausmaß ablaufen, wird die zu kochende Würze vorzugsweise in einer der eigentlichen Kochphase vorausgehenden Vorkochphase vorerhitzt, wobei die Temperatur der Würze während der Vorkochphase nach einem vorgegbenen Temperaturzyklus gesteuert wird. Die innerhalb dieses Temperaturzyklusses auftretende Maximaltemperatur ist vorzugsweise knapp unterhalb der Siedetemperatur der Würze gehalten.

Zur weiteren Verbesserung der Energiebilanz wird zweckmäßigerweise der im Kopfbereich der Auftriebskolonne anfallende Enddampf einem Wärmetauscher zugeführt, der als Kondensator für den Enddampf wirkt und in dem die Restwärme des Enddampfes zumindest teilweise rückgewonnen wird. Die auf diese Weise rückgewonnene Wärme wird bevorzugt zur Erhitzung von Prozesswasser für die Würzebereitung verwendet. Das im Wärmetauscher anfallende Dampfkondensat wird bevorzugt zumindest teilweise in die Auftriebskolonne zurückgeleitet. Zur Optimierung des Energieverbrauchs ist vorteilhafterweise vorgesehen, dass das Rücklaufverhältnis des Dampfkondensats, z.B. durch eine Ventilanordnung, derart gesteuert oder geregelt wird, dass eine besonders kurze Kochzeit und/oder eine besonders geringe benötigte Gesamtverdampfung erzielt wird. Als Wärmetauscher wird anstelle eines gewöhnlichen Kondensators vorzugsweise ein Dephlegmator eingesetzt. Versuche haben diesbezüglich gezeigt, dass durch Kombination der Auftriebskolonne mit nachgeschalteter Dephlegmation eine besonders starke Abreicherung von unerwünschten Aromastoffen mit im Vergleich zu Wasser niedrigem Siedepunkt erzielt wird.

In einer vorteilhafte zur Ausführung des erfindungsgemäßen Verfahrens geeigneten Vorrichtung ist die Auftriebskolonne als Bodenkolonne mit mindestens einem Kolonnenboden ausgebildet. Im Sinne einer verbesserten Durchmischung des Dampfkondensates ist optional mindestens ein Kolonneneinbau, insbesondere ein Kolonnenboden dieser Bodenkolonne um die Achse der Auftriebskolonne rotationsangetrieben.

Alternativ ist die Auftriebskolonne als Packungskolonne mit mindestens einer starren Packung oder einer Packung aus losen Füllkörpern ausgestaltet. In Hinblick auf vorteilhafte Ausführungen von Kolonnenböden und Kolonnenpackungen wird auf K. Sattler, "Thermische Trennverfahren - Grundlagen, Auslegung, Apparate", 2. Aufl., VCH (Weinheim), 1995, Kapitel 2.5.6, S. 189 - 254 Bezug genommen.

Nachfolgend werden Ausführungsbeispiele der Vorrichtung anhand einer Zeichnung näher erläutert. Darin zeigen:
- Fig. 1: in schematischer Schnittdarstellung eine Vorrichtung zur Würzekochung, mit einer Sudpfanne und einer dampfseitig mit dieser verbundenen Auftriebskolonne, wobei die Auftriebskolonne als Bodenkolonne ausgebildet ist,
- Fig. 2: in vergrößerter Detailansicht II gemäß Fig. 1 einen Kolonnenboden der Auftriebskolonne mit einem Überlaufwehr,
- Fig. 3: in Darstellung gemäß Fig. 1 eine alternative Ausführungsform der Vorrichtung, bei welcher die Auftriebskolonne mit zwei rotationsangetriebenen Kolonnenböden ausgestattet ist,
- Fig. 4: in Darstellung gemäß Fig. 1 eine weitere Ausführungsform der Vorrichtung, bei welcher die Auftriebskolonne als Packungskolonne ausgebildet ist,
- Fig. 5: in Darstellung gemäß Fig. 1 eine weitere Ausführungsform der Vorrichtung mit einem der Sudpfanne vorgeschalteten Vorheizkessel und
- Fig. 6: in Darstellung gemäß Fig. 1 eine weitere Ausführungsform der Vorrichtung mit einer Umwälzleitung zur Abziehung von Würze aus der Sudpfanne und Einleitung in die Auftriebskolonne während der Kochphase.

Einander entsprechende Teile und Größen sind in allen Figuren stets mit den gleichen Bezugszeichen versehen.

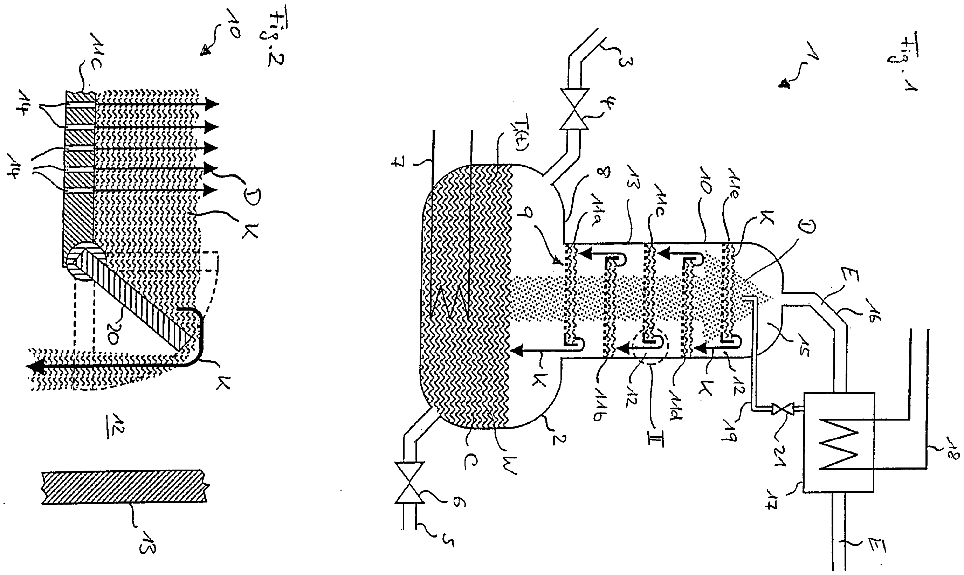

In Fig. 1 ist schematisch eine Vorrichtung 1 zur Würzekochung im Zuge eines Bierbrauprozesses dargestellt. Kernstück der Vorrichtung 1 ist eine Sudpfanne 2, wie sie auch bei einem herkömmlichen Bierbrauverfahren zur Würzekochung eingesetzt wird. Die Sudpfanne 2 ist mit einer Einlassleitung 3 verbunden, über welche die Sudpfanne 2 durch Betätigung eines in der Einlassleitung 3 angeordneten Einlassventils 4 mit einer diskreten (im Folgenden als Charge C bezeichneten Menge) der zu kochenden Würze W beschickbar ist. Die Sudpfanne 2 ist weiterhin mit einer Auslassleitung 5 verbunden, über welche die Charge C nach dem Kochen unter Betätigung eines in der Auslassleitung 5 vorgesehenen Auslassventils 6 aus der Sudpfanne 2 abgelassen werden kann. Die Sudpfanne 2 enthält weiterhin ein internes oder externes Heizelement 7, mittels welchem die in der Sudpfanne 2 aufgenommene Würze W geregelt auf eine vorgegebene Temperatur aufgeheizt werden kann.

In einem Deckenbereich 8 ist die Sudpfanne 2 mit einem Dampfauslass 9 versehen. Dieser Dampfauslass 9 mündet in den Bodenbereich einer auf die Sudpfanne 2 aufgesetzten Auftriebskolonne 10. Die Auftriebskolonne 10 ist bei dem Ausführungsbeispiel gemäß Fig. 1 als Bodenkolonne aufgeführt und enthält als Kolonneneinbauten mehrere Kolonnenböden 11 a bis 11 e, die im Wesentlichen horizontal, und damit etwa senkrecht zu der Strömungsrichtung des aufsteigenden Würzedampfes D, mit Abstand zueinander angeordnet sind. Jeder Kolonnenboden 11a-11e füllt den Querschnitt der Auftriebskolonne 10 mit Ausnahme eines Ablaufschachts 12 für Dampfkondensat K vollständig aus. Der Ablaufschacht 12 eines jeden Kolonnenbodens 11 a-11 e ist jeweils im Randbereich des Letzteren, und somit benachbart zu einer Außenwand 13 der Auftriebskolonne 10 angeordnet. Die Ablaufschächte 12 benachbarter Kolonnenböden 11 a-11 e sind hierbei zueinander entgegengesetzt angeordnet, um den Strömungsweg des Dampfkondensats K zu maximieren. Um einen Dampfdurchtritt durch die Kolonnenböden 11 a bis 11 e zu ermöglichen, sind die Kolonnenböden 11 a bis 11 e mit Dampfdurchtrittsöffnungen 14 (Fig. 2) versehen. Jede Dampfdurchtrittsöffnung 14 ist als Schlitz, Bohrung, Hals, etc. ausgeführt. Optional ist im Bereich einer jeden Dampfdurchtrittsöffnung ein (nicht näher dargestelltes) Umlenkblech, insbesondere eine sogenannte Glocke, für den aufsteigenden Würzedampf D vorgesehen. Um Wärmeverluste im Bereich der Auftriebskolonne 10 weitestmöglich zu vermeiden, ist die Außenwand 13 durch Isoliermaterial oder einen "Vakuummantel" isoliert.

Der oberhalb des obersten Kolonnenbodens 11 e angeordnete Kopfbereich 15 der Auftriebskolonne 10 ist mit einer Dampfablassleitung 16 verbunden, über welche der sich im Kopfbereich 15 ansammelnde Enddampf E abgeleitet wird. In die Dampfablassleitung 16 ist ein Wärmetauscher 17 zur Rückgewinnung der Restwärme des Enddampfes E geschaltet. Die rückgewonnene Restwärme wird mittels eines Kühl/HeizKreislaufes 18 anderen im Zuge des Brauprozesses anfallenden Verfahrensschritten zugeführt. Der Wärmetauscher 17 dient weiterhin als Kondensator. Ein einstellbarer Teil des im Wärmetauscher 17 anfallenden Dampfkondensats K ist über eine Rücklaufleitung 19 in den Kopfbereich 15 der Auftriebskolonne 10 geregelt rückführbar. Der Wärmetauscher 17 umfasst optional einen (nicht näher dargestellten) Abscheider oder Dekanter, der bewirkt, dass nur (oder bevorzugt) eine wässrige Phase des Dampfkondensats über die Rücklaufleitung 19 zurückgeführt wird, während eine organische Phase des Dampfkondensats K abgeleitet wird. Ein solcher Abscheider kann auch im Kopfbereich der Auftriebskolonne 10 angeordnet sein. Der Einsatz eines Abscheiders ist dann zweckmäßig, wenn die thermodynamischen Bedingungen im Kopfbereich der Auftriebskolonne 10 oder im Wärmetauscher 17 derart eingestellt sind, dass es zu einer Phasentrennung des Dampfkondensats K kommt. Anstelle eines gewöhnlichen Wärmetauschers ist bevorzugt ein Dephlegmator eingesetzt. In Hinblick auf vorteilhafte Ausführungen von Wärmetauschern bzw. Kondensatoren wird auf K. Sattler, "Thermische Trennverfahren - Grundlagen, Auslegung, Apparate", 2. Aufl., VCH (Weinheim), 1995, Kapitel 2.10, S. 271 - 284 Bezug genommen.

Zur Würzekochung wird diskontinuierlich jeweils eine Charge C der zu kochenden Würze W in die Sudpfanne 2 eingeleitet und dort während einer Kochphase entsprechend einem vorgegebenen Kochzyklus T₁(t) gekocht.

Der während der Kochphase aus der kochenden Würze W entweichende Würzedampf D gelangt über den Dampfauslass 9 der Sudpfanne 2 in die Auftriebskolonne 10 und durchströmt dort sukzessive die Kolonnenböden 11a bis 11 e. Hierbei kondensieren Wasser und vergleichsweise schwerflüchtig Aromastoffe aus dem aufströmenden Würzedampf D aus und bilden das flüssige Dampfkondensat K, dass sich auf den Kolonnenböden 11 a bis 11 e als Flüssigkeitsfilm ansammelt.

Jedem Kolonnenboden 11 a-11 e ist ein im Bereich des jeweiligen Ablaufschachtes 12 angeordnetes Überlaufwehr 20 zugeordnet (am Beispiel des Kolonnenbodens 11 c vergrößert in Fig. 2 dargestellt). Jedes Überlaufwehr 20 ist schwenkbar gelagert, um den zugeordneten Kolonnenboden 11a-11e bedarfsweise entleeren zu können. Anstelle des schwenkbaren Überlaufwehrs 20 kann zur Entleerung des jeweiligen Kolonnenbodens 11 a-11 e auch ein Entleerungsventil o. dergl. eingesetzt werden.

Das auf einem Kolonnenboden 11 a-11 e angesammelte Dampfkondensat K fließt über den Ablaufschacht 12 des jeweiligen Kolonnenbodens 11 b bis 11 e auf den jeweils nächst tiefer gelegenen Kolonnenboden 11a-11d bzw. von dem untersten Kolonnenboden 11 a zurück in die Sudpfanne 2. Das Dampfkondensat K fließt somit im Gegenstrom zum Würzedampf D.

Die partielle Kondensation des Würzedampfes D vollzieht sich im besonderen Maße im Bereich eines jeden Kolonnenbodens 11 a-11 e, in weichem der aufsteigende Würzedampf D mit dem rückfließenden Dampfkondensat K in direkten Kontakt kommt. Diese Zweiphasenzone besteht bei mittlerer Dampfbelastung aus einer Sprudelschicht und einer je nach Dampfbelastung mehr oder weniger ausgeprägten Sprühschicht als Mitreißzone für Kondensattröpfchen. In diesen Schichten werden durch Kondensation von Wasser und schwerflüchtigen Aromastoffe 11 aus dem Würzedampf D die in der Gasphase verbleibenden leichtflüchtigen Aromastoffe sukzessive angereichert. Dieser Trenneffekt wird durch die freiwerdende Kondensationswärme verstärkt, indem das rückströmende Dampfkondensat K erwärmt wird, wodurch mitkondensierte leichtflüchtige Aromastoffe aus dem Dampfkondensat K wieder verdampfen. Insgesamt wird durch diese mehrstufige Destillation des Würzedampfes D in der Auftriebskolonne 10 die benötigte Gesamtverdampfung während der Kochphase deutlich reduziert, wobei die Austreibung unerwünschter leichtflüchtiger Aromastoffe durch deren Anreicherung in dem Enddampf E dennoch in ausreichendem Maße erreicht wird.

Der sich im Kopfbereich 15 der Auftriebskolonne 10 ansammelnde Enddampf E wird über die Dampfablassleitung 16 abgeleitet, wobei die Restwärme des Enddampfes E, wie vorstehend beschrieben, durch den Wärmetauscher 17 zumindestens teilweise rückgewonnen wird.

Das Rücklaufverhältnis des Dampfkondensats K wird während der Kochphase nach einer vorgegebenen zeitlichen funktionalen Abhängigkeit durch Steuerung des pro Zeiteinheit über die Rücklaufleitung 19 aus dem Wärmetauscher 17 rückfließenden Dampfkondensats K derart eingestellt, dass eine möglichst kurze Dauer der Kochphase und/oder eine möglichst geringe Gesamtverdampfung erzielt wird. Die Menge des über die Rücklaufleitung 19 in die Auftriebskolonne 10 zurückfließenden Dampfkondensats K wird über ein in der Rücklaufleitung 19 angeordnetes Rücklaufventil 21 gesteuert.

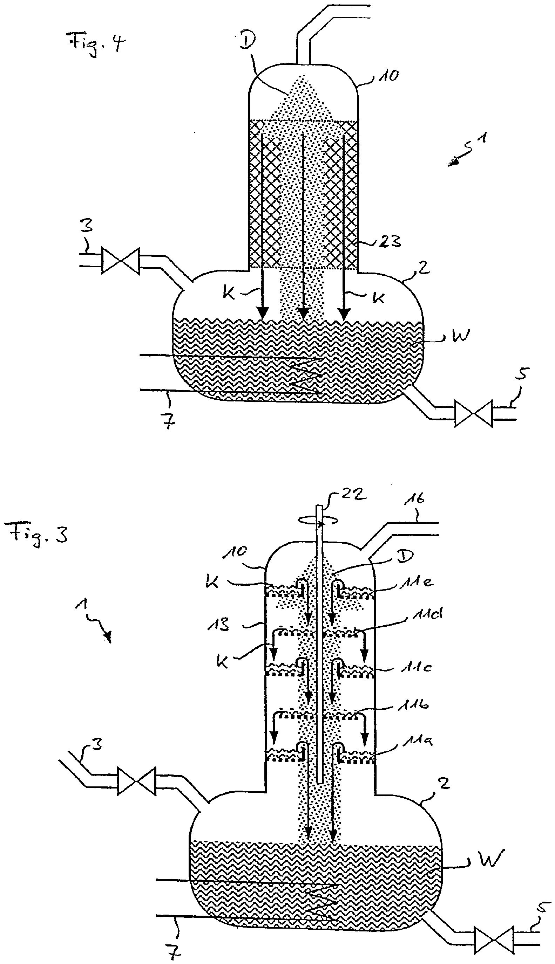

Fig. 3 zeigt die Sudpfanne 2 und die Auftriebskolonne 10 einer alternativen Ausführungsform der Vorrichtung 1. Hierbei umfasst die Auftriebskolonne 10 zwei scheibenförmige Kolonnenböden 11 b und 11 d, die an einer zentralen, koaxial mit der Achse der Auftriebskolonne 10 geführten Welle 22 rotationsangetrieben aufgehängt sind. Die rotierenden Kolonnenböden 11 b und 11 d sind dabei jeweils zwischen ringförmigen und fest mit der Außenwand 13 verbundenen Kolonnenböden 11 a und 11 c bzw. 11 c und 11e angeordnet. In Folge der wechselnden Anordnung zwischen rotierenden Kolonnenböden 11 bund 11 d und nicht-rotierenden Kolonnenböden 11 a, 11 c, 11 e findet eine besonders gute Durchmischung des rückfließenden Dampfkondensats K und ein besonders intensiver Kontakt des Dampfkondensats K mit dem aufströmenden Würzedampf D statt. Alternativ oder zusätzlich zu rotierenden Kolonnenböden können auch ein oder mehrere rotierende Trichter, die das Dampfkondensat K versprühen, vorgesehen sein.

In einer in Fig. 4 dargestellten weiteren Variante der Vorrichtung 1 ist die Auftriebskolonne 10 als sogenannte Packungskolonne ausgeführt. Die Auftriebskolonne 10 umfasst somit als Kolonneneinbauten anstelle von Kolonnenböden eine Kolonnenpackung 23. Die Kolonnenpackung 23 ist wahlweise als starre, geordnete Gitterstruktur oder als lose Schüttung von Füllkörpern ausgebildet. Ähnlich wie bei einer Bodenkolonne beruht die Trennwirkung einer Packungskolonne auf dem direkten Kontakt des aufströmenden Würzedampfes D mit dem innerhalb der Kolonnenpackung 23 im Gegenstrom zurückrinnenden Dampfkondensat K. Die Packungskolonne stellt im Gegensatz zur Bodenkolonne keine diskret aufeinander folgende Destillationsschritte zur Verfügung. Vielmehr stellt sich innerhalb der Kolonnenpackung eine kontinuierlich zunehmende Anreicherung leichtflüchtiger Komponenten im Würzedampf D ein.

Aufgrund der durch die Rektifikation des Würzedampfes D erzielten Effizienzsteigerung ist die zur Austreibung unerwünschter Aromastoffe aus der Würze W erforderliche Mindestkochzeit unter Umständen so kurz, dass die mit der Würzekochung weiterhin beabsichtigten biochemischen Reaktionen innerhalb dieser Zeit nicht in erwünschtem Umfang ablaufen können. In diesem Fall ist vorgesehen, der eigentlichen Kochphase eine Vorkochphase vorzuschaften, in welcher die zu kochende Würze nach einem vorgegebenen Temperaturzyklus T₂(t) vorerhitzt wird. Die dem Temperaturzyklus T₂(t) entsprechende Temperatur der Würze W, deren Maximalbetrag bevorzugt knapp unterhalb des Siedepunktes der Würze gehalten ist, wird dabei durch eine (nicht näher dargestellte) Temperaturregelung eingestellt.

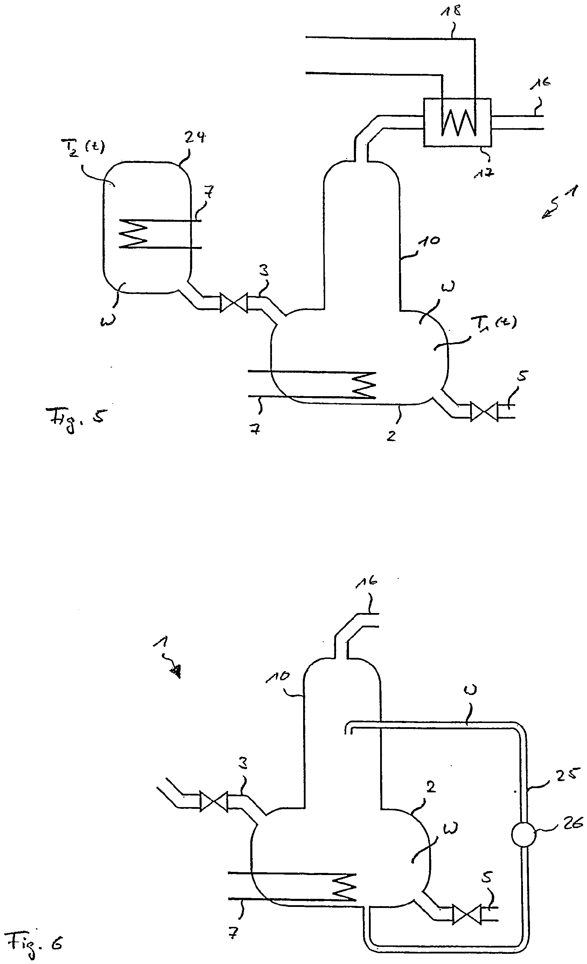

Der Vorkochphase wird die Würze W bevorzugt nach Einleitung in die Sudpfanne 2, und somit innerhalb der Sudpfanne 2, unterzogen. Bei einer in Fig. 5 dargestellten Ausführungsvariante der Vorrichtung 1 findet diese Vorkochphase dagegen außerhalb der Sudpfanne 2 in einem dieser vorgeschalteten Vorheizkessel 24 statt. Nach Abschluss der Vorkochphase wird die vorerhitzte Würze W chargenweise über Einlassleitung 3 in die Sudpfanne 2 eingeleitet. Die in Fig. 5 aus Gründen der Vereinfachung ohne Kolonneneinbauten dargestellte Auftriebskolonne 10 ist wahlweise als Bodenkolonne oder Packungskolonne ausgeführt.

Eine in Fig. 6 dargestellte weitere Variante der Vorrichtung 1 dient zur Durchführung einer Verfahrensvariante, bei der während der Kochphase Würze W aus der Sudpfanne 2 abgezogen und der Auftriebskolonne 10 zugeführt wird, so dass die Würze W während der Kochphase umgewälzt wird. Der unterhalb der Einleitungsstelle angeordnete Bereich der Auftriebskolonne 10 wirkt somit bezüglich der eingeleiteten Würze W auch als Abtriebskolonne. Die Vorrichtung 1 umfasst hierzu eine Umwälzleitung 25, die den bodenseitigen Bereich der Sudpfanne 2 mit der Auftriebskolonne 10 verbindet. Die Umwälzleitung 25 kann grundsätzlich auf beliebiger Höhe (insbesondere im Bereich eines beliebigen Kolonnenbodens 11 a-11 e) in die Auftriebskolonne 10 münden. Bevorzugt wird die Würze W in den Kopfbereich 15 der Auftriebskolonne 10, insbesondere auf den höchsten Kolonnenboden 11 e, eingeleitet.

In die Umwälzleitung 25 ist eine insbesondere frequenzgesteuerte Umwälzpumpe 26 geschaltet. Bei der Vorrichtungsvariante gemäß Fig. 6 kann die Auftriebskolonne 10 wahlweise als Bodenkolonne oder Packungskolonne nach einer der vorstehend beschriebenen Ausführungsvarianten ausgebildet sein. Es kann zudem alternativ oder zusätzlich zu dem dargestellten internen Heizelement 7 ein (hier nicht näher dargestelltes) externes Heizelement vorgesehen sein. Letzteres kann insbesondere in der Umwälzleitung 25 angeordnet sein.

Wird im Falle der Vorrichtungsvariante gemäß Fig. 6 eine Bodenkolonne eingesetzt, so werden insbesondere die unterhalb der Einleitungsstelle angeordneten Kolonnenböden nach Beendung der Kochphase mechanisch entleert, damit keine Würze W auf den Kolonnenböden verbleibt. Diese Entleerung der verschiedenen Kolonnenböden findet vorzugsweise in einer vorgegebenen zeitlichen Reihenfolge statt.

Die Vorrichtungsvariante gemäß Fig. 6 wird optional in Kombination mit einem Verheizkessel 24 und/oder mit einem Wärmetauscher 17 nach einer der vorstehend beschriebenen Vorrichtungsvarianten eingesetzt.

Die Kochphase, und gegebenenfalls die Vorkochphase finden bevorzugt im Hinblick auf eine möglichst einfache Verfahrensdurchführung bei Umgebungsdruck statt. Alternativ hierzu ist aus Gründen einer verbesserten Energiebilanz vorgesehen, die Würzekochung bei einem Unterdruck im Bereich von etwa 500 mbar bis Umgebungsdruck durchzuführen.

Für eine einfache Reinigung der Vorrichtung 1 sind die Sudpfanne 2, die Auftriebskolonne 10 und gegebenenfalls der Vorheizkessel 24 an eine (nicht näher dargestellte) CIP(Cleaning in Place)-Reinigungsanlage angeschlossen, wie sie bei einer herkömmlichen Brauanlage bereits zur Reinigung der Sudpfanne üblich ist.

### Bezugszeichenliste

- 1: Vorrichtung
- 2: Sudpfanne
- 3: Einlassleitung
- 4: Einlassventil
- 5: Auslassleitung
- 6: Auslassventil
- 7: Heizelement
- 8: Deckenbereich
- 9: Dampfauslass
- 10: Auftriebskolonne
- 11 a-e: Kolonnenboden
- 12: Ablaufschacht
- 13: Außenwand
- 14: Dampfdurchtrittsöffnung
- 15: Kopfbereich
- 16: Dampfablassleitung
- 17: Wärmetauscher
- 18: Kühl/Heiz-Kreislauf
- 19: Rücklaufleitung
- 20: Überlaufwehr
- 21: Rücklaufventil
- 22: Welle
- 23: Kolonnenpackung
- 24: Vorheizkessel
- 25: Umwälzleitung
- 26: Umwälzpumpe

- C: Charge
- D: Würzedampf
- K: Dampfkondensat
- E: Enddampf
- t: Kochzeit
- T₁(t): Kochzyklus
- T₁(t): Temperaturzyklus
- W: Würze

## Patentansprüche

1. Verfahren zur Würzekochung im Zuge eines Bierbrauprozesses,
- bei welchem die zu kochende Würze (W) chargenweise und diskontinuierlich einer Sudpfanne (2) zugeführt wird,
- bei welchem jede der Sudpfanne (2) zugeführte Charge (C) der Würze (W) während einer Kochphase gekocht wird, und
- bei welchem der während der Kochphase entweichende Würzedampf (D) einer dampfseitig mit der Sudpfanne (2) verbundenen Auftriebskolonne (10) zugeleitet und in dieser rektifiziert wird.

2. Verfahren nach Anspruch 1,
**dadurch gekennzeichnet,**
**dass** das in der Auftriebskolonne (10) anfallende Dampfkondensat (K) in die Sudpfanne (2) zurückgeleitet wird.

3. Verfahren nach Anspruch 1 oder 2,
**dadurch gekennzeichnet,**
**dass** die zu kochende Würze (W) in einer der Kochphase vorausgehenden Vorkochphase entsprechend einem vorgegebenen Temperaturzyklus ( T₂(t) ) vorerhitzt wird.

4. Verfahren nach einem der Ansprüche 1 bis 3,
**dadurch gekennzeichnet,**
**dass** der in einem Kopfbereich (15) der Auftriebskolonne (10) anfallende Enddampf (E) zur Wärmerückgewinnung und Kondensation einem Wärmetauscher (17) zugeführt wird.

5. Verfahren nach Anspruch 4,
**dadurch gekennzeichnet,**
**dass** Restwärme des Enddampfes (E) zur Erhitzung von Prozesswasser für die Würzebereitung rückgewonnen wird.

6. Verfahren nach einem der Ansprüche 2 bis 5,
**dadurch gekennzeichnet,**
**dass** das Rücklaufverhältnis des Dampfkondensats (K) in Hinblick auf eine besonders kurze Kochphase und/oder eine niedrige benötigte Gesamtverdampfung gesteuert oder geregelt wird.

7. Verfahren nach einem der Ansprüche 1 bis 6,
**dadurch gekennzeichnet,**
**dass** die Kochphase unter einem Druck zwischen 500 mbar und Umgebungsdruck durchgeführt wird.

8. Verfahren nach einem der Ansprüche 1 bis 7,
**dadurch gekennzeichnet,**
**dass** während der Kochphase Würze (W) aus der Sudpfanne (2) abgezogen und in die Auftriebskolonne (10) eingeleitet wird.

9. Verfahren nach Anspruch 8,
**dadurch gekennzeichnet,**
**dass** die Würze (W) von dem Boden der Sudpfanne (2) abgezogen wird.

## Claims

1. Method for boiling wort in a beer brewing process,
- in which the wort to be boiled (W) is supplied in batches and discontinuously to a brewing kettle (2),
- in which each batch (C) of the wort (W) supplied to the brewing kettle is boiled during the boiling phase, and
- in which the escaping wort vapour (D) is fed during the boiling phase to an ascending stripping column (10) connected on the steam side with the brewing kettle (2) and rectified in said column.

2. Method according to claim 1,
**characterised in that**,
the vapour condensate (K) accumulating in the ascending stripping column (10) is fed back into the brewing kettle (2).

3. Method according to claim 1 or 2,
**characterised in that**,
the wort (W) to be boiled is preheated according to a predetermined temperature cycle (T₂(t)) in a pre-boiling phase that precedes the boiling phase.

4. Method according to one of the claims 1 to 3,
**characterised in that**,
the final vapour (E) accumulating in a head zone (15) of the ascending stripping column (10) is fed to a heat exchanger (17) for heat recovery and condensation.

5. Method according to claim 4,
**characterised in that**,
the residual heat of the final vapour (E) is recovered for heating process water for the wort preparation.

6. Method according to one of the claims 2 to 5,
**characterised in that**,
the reflux ratio of the vapour condensate (K) is controlled or adjusted with regard to a particularly short boiling phase and/or a required low overall vaporisation.

7. Method according to one of the claims 1 to 6,
**characterised in that**,
the boiling phase is carried out under a pressure of between 500 mbar and atmospheric pressure.

8. Method according to one of the claims 1 to 7,
**characterised in that**,
wort (W) is withdrawn from the brewing kettle (2) and fed into the ascending stripping column (10) during the boiling phase.

9. Method according to claim 8,
**characterised in that**,
the wort (W) is withdrawn from the bottom of the brewing kettle (2).

## Revendications

1. Procédé de cuisson de moût au cours d'un processus de brassage de bière,
- où le moût à cuire (W) alimente par charges successives et de manière discontinue une chaudière de brassage (2),
- où chaque charge (C) du moût (W) alimentant la chaudière de brassage (2) est cuite pendant une phase de cuisson, et
- où la vapeur de moût (D) qui se dégage pendant la phase de cuisson est conduite vers une colonne montante (10) reliée à la chaudière de brassage (2) côté vapeur, où elle est rectifiée.

2. Procédé selon la revendication 1, **caractérisé en ce que** le condensat de vapeur (K) formé dans la colonne montante (10) est reconduit vers la chaudière de brassage (2).

3. Procédé selon la revendication 1 ou la revendication 2, **caractérisé en ce que** le moût à cuire (W) est pré-chauffé au cours d'une phase de pré-cuisson précédant la phase de cuisson conformément à un cycle de température (T₂(t)) prescrit.

4. Procédé selon l'une des revendications 1 à 3, **caractérisé en ce que** la vapeur finale (E) formée dans une zone de sommet (15) de la colonne montante (10) est reconduite vers un échangeur de chaleur (17) pour récupération de chaleur et condensation.

5. Procédé selon la revendication 4, **caractérisé en ce que** la chaleur résiduelle de la vapeur finale (E) est récupérée pour le chauffage de l'eau de processus destinée à la préparation du moût.

6. Procédé selon l'une des revendications 2 à 5, **caractérisé en ce que** le taux de recirculation du condensat de vapeur (K) est commandé ou régulé compte tenu d'une phase de cuisson particulièrement courte et/ou d'une faible évaporation globale exigée.

7. Procédé selon l'une des revendications 1 à 6, **caractérisé en ce que** la phase de cuisson est exécutée sous une pression comprise entre 500 mbar et la pression ambiante.

8. Procédé selon l'une des revendications 1 à 7, **caractérisé en ce que** pendant la phase de cuisson, du moût (W) est soutiré de la chaudière de brassage (2) et conduit vers la colonne montante (10).

9. Procédé selon la revendication 8, **caractérisé en ce que** le moût (W) est soutiré du fond de la chaudière de brassage (2).
